# EUROPEAN PATENT APPLICATION

(11) **EP 2 617 957 A1**
(43) Date of publication of application: **24.07.2013**
(21) Application number: 11824787.3
(22) Date of filing: 15.09.2011
(51) Int. Cl.: F01N 3/20, F01N 3/025, F01N 9/00, F02D 41/20

(54) **METHOD FOR WARMING AFTER-TREATMENT BURNER SYSTEM**

(30) Priority: 16.09.2010 JP 2010207730
(71) Applicant: Hino Motors Ltd., Tokyo 191-8660 (JP)
(72) Inventor: TSUMAGARI, Ichiro, Hino-shi Tokyo 191-8660 (JP)
(74) Representative: Walcher, Armin
(86) International application number: PCT/JP2011/005204
(87) International publication number: WO 2012/035774

(57) **Abstract**

Disclosed is a method for warming an after-treatment system in which a burner 14 is arranged upstream of a particulate filter 12 (exhaust purifying member) incorporated in an exhaust pipe 11 and the particulate filter 12 is adapted to be heated by combustion with the burner 14. On condition that an ambient temperature surrounding the burner 14 is below a predetermined temperature, the energization is conducted to an electromagnetic valve-type injector 15 serving for fuel spray of the burner 14 with the fuel supply being stopped. The energization brings about Joule heat generated in an electromagnetic coil inside the injector 15 to make the warming.

## Description

### Technical Field

The present invention relates to a method for warming an after-treatment burner system.

### Background Art

In a conventional diesel engine, a particulate filter is incorporated in an exhaust pipe for flow of an exhaust gas to capture particulates (particulate matters) in the exhaust gas. However, the exhaust gas from the diesel engine in a normal operation status rarely has a chance to reach a temperature level at which the particulates burns by themselves. Consequently, an oxidation catalyst having active species such as Pt and Pd is integrally carried by the particulate filter.

Specifically, employment of such particulate filter carrying the oxidation catalyst facilitates an oxidation reaction of the captured particulates to lower an ignition temperature, so that the particulates can be removed by combustion even at an exhaust gas temperature lower than ever before.

However, even if such particulate filter is employed, an amount of captured particulates will exceed an amount of treated particulates in operation areas with low exhaust temperature levels. Continued operation with such low exhaust temperature levels may hinder sufficient regeneration of the particulate filter, resulting in excessive accumulation of the captured particulates in the particulate filter.

Thus, it has been conceived to additionally arrange a flow-through type oxidation catalyst in front of the particulate filter; with accumulation of the particulates becoming increased, fuel is added to the exhaust gas upstream of the oxidation catalyst to forcibly regenerate the particulate filter.

Specifically, the fuel (HC) added upstream of the particulate filter undergoes the oxidation reaction during its passing through the frontward oxidation catalyst. The exhaust gas heated by heat of the reaction and flowing into the particulate filter just behind increases a catalyst bed temperature of the particulate filter to burn off the particulates, thereby regenerating the particulate filter.

However, in a vehicle such as a city shuttle-bus with travel pattern of traveling on congested roads for a long time, the frontward oxidation catalyst hardly has a catalyst bed temperature elevated enough for sufficient catalytic activity and thus an activated oxidation reaction of the added fuel in the oxidation catalyst, failing in effective regeneration of the particulate filter within a short time.

Thus, it has been studied in recent years to arrange a burner on an entry side of the particulate filter and burn off the captured particulates by combustion with the burner regardless of an operating status of the vehicle, thereby efficiently regenerating the particulate filter within a short time.

There exist the following Patent Literatures 1 and 2 as prior art document information relating to this kind of technique on exhaust gas purification catalyst or heating of exhaust gas by use of a burner.

### Citation List

### Patent Literature

[Patent Literature 1] JP 5-086845A
[Patent Literature 2] JP 6-167212A

### Summary of Invention

### Technical Problems

At cold start-up for example in a cold district, combustion with a burner, which utterly cools off, may be started where forced regeneration of a particulate filter is to be instantly conducted and/or where bed temperatures of different catalysts (such as a selective reduction catalyst for reduction and purification of NOₓ using urea water or HC as reducing agent) arranged downstream of the particulate filter are to be raised for facilitated catalyst activation. However, because of fuel inside an injector being cool and highly viscous, the sprayed fuel may be unsatisfactorily atomized, disadvantageously resulting in ignition instability.

The invention was made in view of the above and has its object to warm a burner at cold start-up so as to improve ignition stability.

### Solution to Problems

The invention is directed to a method for warming an after-treatment burner system wherein a burner is arranged upstream of an exhaust purifying member incorporated in an exhaust pipe, said exhaust purifying member being adapted to be heated by combustion with said burner, characterized by comprising energizing an electromagnetic valve-type injector, which serves for fuel spray in said burner, on condition that an ambient temperature surrounding the burner is below a predetermined temperature and with the fuel supply to said injector being stopped, whereby Joule heat by the energization is generated in an electromagnetic coil inside the injector to make the warming.

Thus, in this manner, even if the burner cools off at cold start-up for example in a cold district, the injector is energized on condition that the ambient temperature surrounding the burner is below the predetermined temperature. The energization brings about Joule heat generated in the electromagnetic coil inside the injector and the fuel inside the injector is heated to have lowered viscosity, so that the fuel spray is satisfactorily atomized to substantially improve the ignition stability.

Warming of the burner by energization of the electromagnetic coil is conducted with the fuel supply being stopped, so that the fuel is not sprayed from the injector even if the electromagnetic coil is excited by the energization into switching of a fuel circuit inside the injector.

Furthermore, it is preferable in the method of the invention that energization time to the injector is varied depending on the ambient temperature surrounding the burner. Then, the lower the ambient temperature surrounding the burner is, the more the energization time to the injector may be lengthened to increase a generation amount of Joule heat.

### Advantageous Effects of Invention

According to a method for warming an after-treatment burner system in the invention as mentioned in the above, various excellent effects and advantages can be obtained as follows:

(I) The energization is conducted to the injector on condition that the ambient temperature surrounding the burner is below a predetermined temperature, and the energization brings about Joule heat generated in the electromagnetic coil inside the injector, which heats the fuel inside the injector to lower the viscosity thereof, so that even if the burner cools off at cold start-up for example in a cold district, the fuel spray can be satisfactorily atomized to substantially improve the ignition stability.

(II) For warming of the burner at cold start-up, there is no need of newly adding any special equipment. Joule heat by energizing an existing electromagnetic coil inside the injector can be utilized to warm the burner, so that the warming can be attained with extremely low cost.

(III) If the energization time to the injector is varied depending upon the ambient temperature surrounding the burner, then the lower the ambient temperature surrounding the burner is, the more the energization time to the injector may be lengthened to increase the generation amount of Joule heat. Thus, the burner can be warmed more reliably to improve the ignition stability; and excess energization can be averted as much as possible to make requisite minimum an electric power consumption required for the energization.

### Brief Description of Drawings

Fig. 1 is a schematic view showing a fundamental structure for an after-treatment burner system to which the invention is applied;
Fig. 2 is a flowchart on a control procedure conducted by a controller shown in Fig. 1;
Fig. 3 is a flowchart showing a detailed control procedure on a burner warming treatment shown in Fig. 2;
Fig. 4 is a graph showing a relationship between ambient temperature surrounding a burner and energization time; and
Fig. 5 is a flowchart showing a detailed control procedure on a burner operation treatment shown in Fig. 2.

### Description of Embodiment

An embodiment of the invention will be described in conjunction with the drawings.

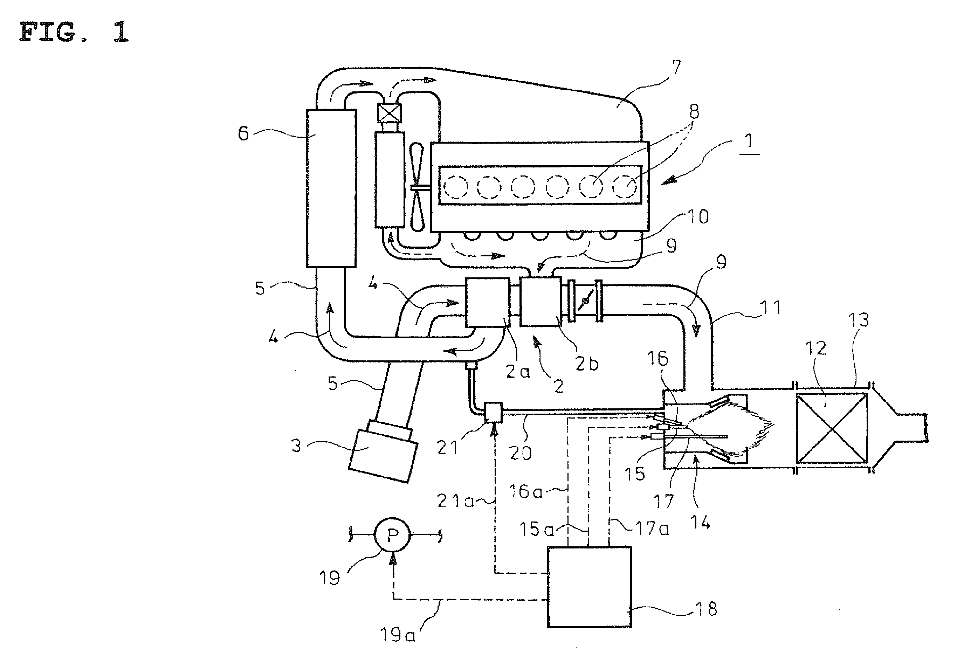

Figs. 1-5 show a fundamental structure of an after-treatment burner system to which the invention is applied. In Fig. 1, reference numeral 1 denotes a diesel engine equipped with a turbocharger 2. Intake air 4 introduced from an air cleaner 3 is led through an intake pipe 5 to a compressor 2a of the turbocharger 2. The intake air 4 pressurized by the compressor 2a is led to an intercooler 6 where it is cooled. The intake air 4 is further led from the intercooler 6 to an intake manifold 7 and is distributed to respective cylinders 8 of the engine 1 (exemplarily illustrated in Fig. 1 is a case with inline six cylinders). Further, an exhaust gas 9 discharged from the respective cylinders 8 of the diesel engine 1 is led via an exhaust manifold 10 to a turbine 2b of the turbocharger 2. The exhaust gas 9 having driven the turbine 2b is discharged to an exhaust pipe 11.

Incorporated in the exhaust pipe 11 is a particulate filter 12 (exhaust purification member) which integrally carries an oxidation catalyst and which is encased by a muffler 13. Arranged in front of the particulate filter 12 is a burner 14 which injects a proper amount of fuel and ignites and burns the fuel.

The burner 14 includes an electromagnetic valve-type injector 15 serving for fuel spray of the burner 14, an ignition plug 16 for ignition of the fuel injected through an injection port of the burner and a temperature sensor 17 for sensing flame temperature. The temperature sensor 17 is adapted to detect an ambient temperature surrounding the burner 14 even the burner 14 is not ignited, a detection signal 17a from the sensor being input to a controller 18 which constitutes an engine control computer or electronic control unit (ECU).

Then, in the controller 18, on condition that the ambient temperature surrounding the burner 14 grasped on the basis of the detection signal 17a is below a predetermined temperature, an operation signal 15a for operation command to the injector 15 is output. More specifically, energization is conducted to the injector 15.

It is configured in this case that an operation signal 19a for operation command to the fuel pump 19a supplying fuel to the injector 15 is not output to the fuel pump 19. More specifically, energization to the fuel pump 19 is shut off.

In a normal operation condition of the burner 14, the operation signal 19a for operation command to the fuel pump 19 is output and an ignition signal 16a for sparking command to the ignition plug 16 is output. Further, a valve-opening signal 21a for valve-opening operation command to a combustion air valve 21 of a combustion air supply pipe 20 which extracts part of the intake air 4 from downstream of the compressor 2a of the turbocharger 2 to guide the same as combustion air into the burner 14 is output, and then the operation signal 15a for operation command to the injector 15 is output.

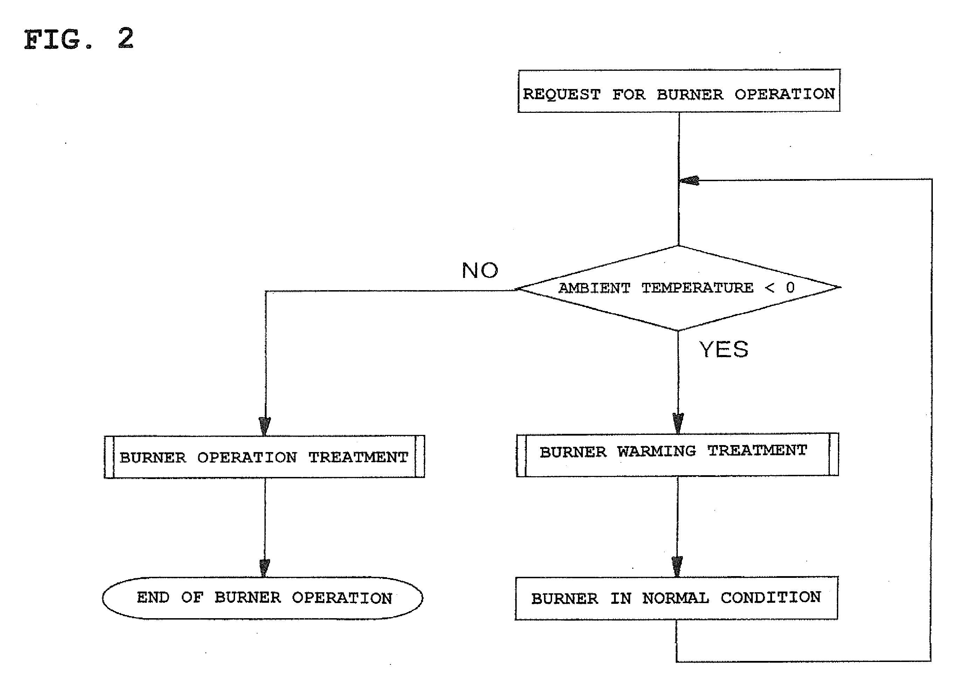

Fig. 2 is a flowchart for explanation of a control procedure conducted by the controller. When an operation of the burner 14 is requested, it is determined whether the ambient temperature surrounding the burner 14 sensed by the temperature sensor 17 is below 0°C or not. In the case of below 0°C, the burner warming treatment is selected and after the treatment the determination of the ambient temperature is conducted again. If the ambient temperature surrounding the burner 14 is at or above 0°C, the normal burner operation treatment is selected. Here, the explanation has been made under the assumption that the threshold value for determination of transition to the burner warming treatment is 0°C; however, of course, the threshold value may be set to any temperature other than 0°C.

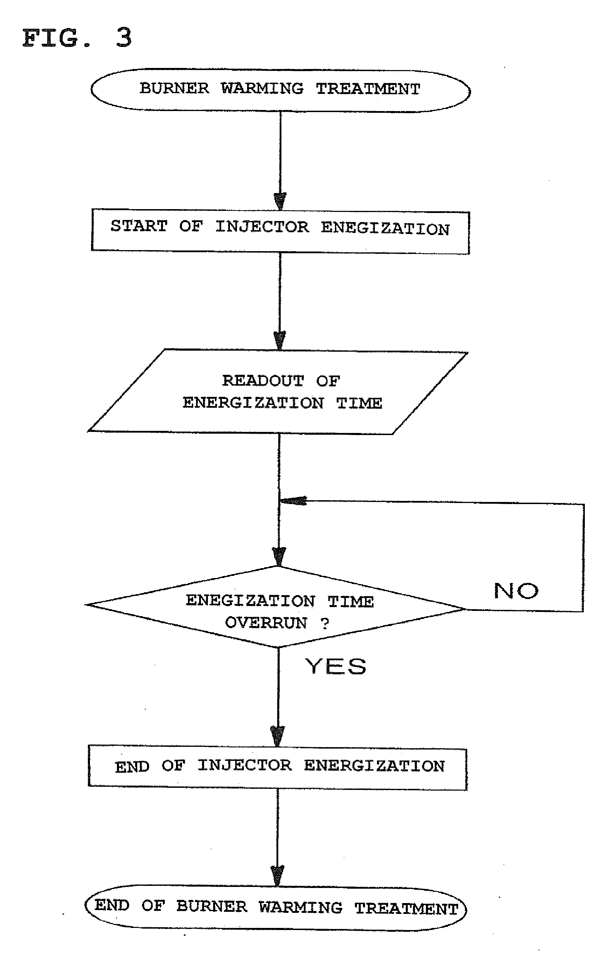

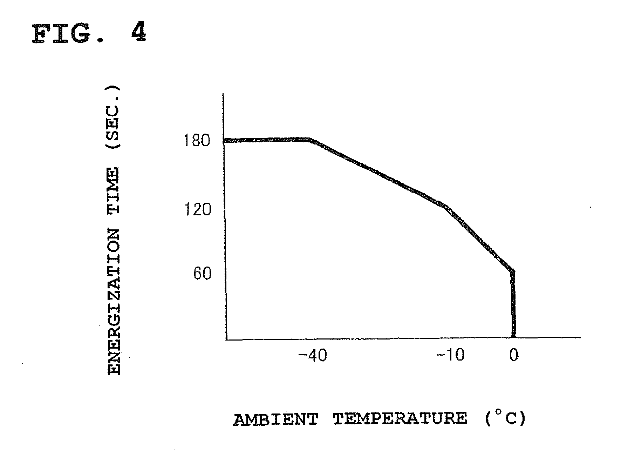

Fig. 3 shows a detailed control procedure of the burner warming treatment in the flowchart of Fig. 2. First, when energization of the injector 15 is started, an energization time depending on the ambient temperature is read out from a control map as shown in Fig. 4. After the energization time read out elapses, the energization of the injector 15 is ended. Thus, the burner warming treatment is ended.

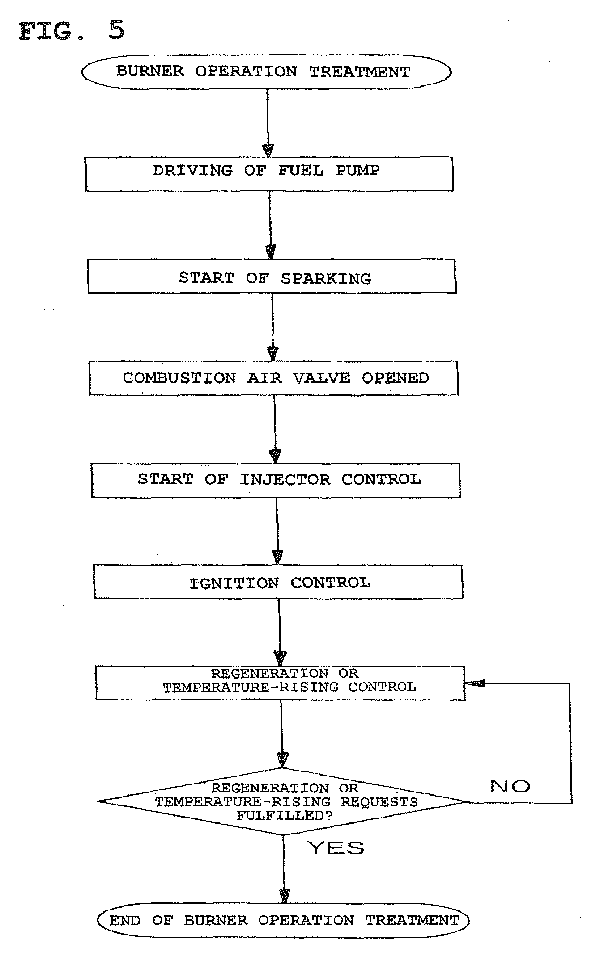

Incidentally, Fig. 5 shows a detailed control procedure on normal burner operation treatment shown in the flowchart of Fig. 2. In control of such normal operation of the burner 14, actuation of the fuel pump 19, start of sparking of the ignition plug 16, the valve-opening operation of the combustion air valve 21 of the combustion air supply pipe 20 are respectively conducted and then the control of the injector 15 is started. Ignition control of the burner 14 and regeneration control for forced regeneration of the particulate filter 12 or temperature-rising control for increased bed temperatures of different catalysts (such as selective reduction catalyst for reducing and purifying NOₓ using urea water or HC as reducing agent) arranged downstream of the particulate filter for facilitated activation are conducted. When regeneration or temperature-rising requirements are fulfilled, the burner operation treatment is ended.

Thus, even if the burner 14 cools off at cold start-up for example in a cold district, the burner 14 is controlled in such control procedure to energize the injector 15 on condition that the ambient temperature surrounding the burner 14 sensed by the temperature sensor 17 is below the predetermined temperature. The energization brings about Joule heat generated in the electromagnetic coil inside the injector 15 to heat the fuel inside the injector 15 to lower the viscosity thereof, so that fuel spray is satisfactorily atomized to substantially improve ignition stability.

Warming of the burner 14 by energizing the electromagnetic coil is conducted with the fuel supply being stopped and with no operation signal 19a for operation command to the fuel pump 19 being output. As a result, the fuel is not sprayed from the injector 15 even if the electromagnetic coil is excited by the energization into switching of a fuel circuit inside the injector 15.

Thus, according to the above embodiment, the energization is conducted to the injector 15 on condition that the ambient temperature surrounding the burner 14 is below a predetermined temperature, and the energization brings about Joule heat generated in the electromagnetic coil inside the injector 15, which heats the fuel inside the injector 15 to lower the viscosity thereof, so that even if the burner 14 cools off at cold start-up for example in a cold district, the fuel spray can be satisfactorily atomized to substantially improve ignition stability.

For warming of the burner 14 at cold start-up, there is no need of newly adding any special equipment. Joule heat by energization of the existing electromagnetic coil inside the injector 15 can be utilized to warm the burner 14, so that the warming can be attained with extremely low cost.

The lower the ambient temperature surrounding the burner 14 is, the more the energization time to the injector 15 may be lengthened to increase the generation amount of Joule heat. Thus, the burner 14 can be warmed more reliably to improve ignition stability. And, excess energization can be averted as much as possible to make requisite minimum an electric power consumption required for the energization.

It is to be understood that a method for warming an after-treatment burner system according to the invention is not limited to the above embodiment. In the illustrated embodiment, the explanation has been made on a case where the exhaust purifying member just behind the burner is a particulate filter; however, of course, the invention may be similarly applied to a case where different exhaust purification catalysts such as a selective reduction catalyst with a property capable of selectively reacting NOₓ with a reducing agent even in the presence of oxygen or NOₓ storage reduction catalyst with a property of oxidizing NOₓ in the exhaust gas and temporarily storing the same in the form of nitrate salt when air-fuel ratio of exhaust is lean and decomposing and discharging NOₓ through the intervention of, for example, unburned HC or CO when O₂ concentration in the exhaust is lowered are arranged as exhaust purifying members in place of the particulate filter or arranged in addition downstream of the particulate filter. That is, the invention may be similarly applied to an after-treatment burner system where a burner is utilized for temperature rising of these exhaust purification catalysts during cold state to active temperature areas.

**Reference Signs List**

| | |
|---|---|
| 11 | exhaust pipe |
| 12 | particulate filter (exhaust purifying member) |
| 14 | burner |
| 15 | injector |
| 15a | operation signal |
| 17 | temperature sensor |
| 17a | detection signal |
| 18 | controller |
| 19 | fuel pump |
| 19a | operation signal |

## Claims

1. A method for warming an after-treatment burner system wherein a burner is arranged upstream of an exhaust purifying member incorporated in an exhaust pipe, said exhaust purifying member being adapted to be heated by combustion with said burner, comprising energizing an electromagnetic valve-type injector, which serves for fuel spray in said burner, on condition that an ambient temperature surrounding the burner is below a predetermined temperature and with the fuel supply to said injector being stopped, whereby Joule heat by the energization is generated in an electromagnetic coil inside the injector to make the warming.

2. The method for warming the after-treatment burner system as claimed in claim 1, wherein energization time to the injector is varied depending on the ambient temperature surrounding the burner.
